# EUROPÄISCHE PATENTSCHRIFT

(11) **EP 0 728 547 B1**
(45) Veröffentlichungstag und Bekanntmachung des Hinweises auf die Patenterteilung: **08.12.1999**
(21) Anmeldenummer: 96102232.4
(22) Anmeldetag: 15.02.1996
(51) Int. Cl.: B22D 41/00, C21C 7/10

(54) **Aufnahmebehälter, insbesondere Vakuumbehälter, für eine Küvette**
Containing apparatus in particular a vacuum container for crucible
Récipient, en particulier un récipient sous vide pour un creuset

(30) Priorität: 21.02.1995 DE 29502808 U
(43) Veröffentlichungstag der Anmeldung: 28.08.1996
(73) Patentinhaber: Georg Schultheiss Electronic, D-71292 Friolzheim (DE)
(72) Erfinder: Schultheiss, Georg, D-71292 Friolzheim (DE)
(74) Vertreter: Leitner, Waldemar, Dr. techn.

(56) Entgegenhaltungen:
- EP-A- 0 612 201

## Beschreibung

Die Erfindung betrifft einen Aufnahmebehälter, insbesondere einen Vakuumbehälter, für eine Küvette, wobei der Aufnahmebehälter einen Wandbereich, der den einen Aufnahmeraum für die Küvette ausbildenden Innenraum des Aufnahmebehälters begrenzt, und einen Bodenbereich aufweist.

Vakuumbehälter für als Standküvetten ausgebildete Schmelzküvetten sind allgemein bekannt. Diese weisen in ihrem unteren Bereich einen rundum verlaufenden Flansch mit einem Dichtungselement auf, auf das die Standküvette aufsetzbar ist. Es ist also bei diesen speziell für Standküvetten ausgelegten Aufnahmebehälter in nachteiliger Art und Weise nicht möglich, Hängeküvetten zu verwenden, so daß die Betreiber von derartigen Aufnahmebehältern verwendenden Anlagen gezwungen sind, sich von Anfang an entweder für einen für Standküvetten adaptierten Vakuumbehälter oder für einen für Hängeküvetten ausgebildeten Vakuumbehälter zu entscheiden. Ein späterer Wechsel ist nicht möglich.

Der bekannte Aufnahmebehälter besitzt darüber hinaus noch den Nachteil, daß das Einsetzen und - in noch größerem Maß - das Herausnehmen der heißen Standküvette nach dem Schmelzvorgang nur schwierig durchzuführen ist.

Zur Vermeidung dieser Nachteile stellt sich die Erfindung die Aufgabe, einen Aufnahmebehälter für eine Küvette der eingangs genannten Art derart weiterzubilden, daß er sowohl für Stand- als auch für Hängeküvetten eingesetzt werden kann.

Diese Aufgabe wird erfindungsgemäß dadurch gelöst, daß im Aufnahmebehälter mindestens zwei voneinander beabstandet angeordnete Dichteinrichtungen vorgesehen sind, die jeweils einen vom Wandbereich ins Innere des Aufnahmebehälters vorspringenden, umlaufenden Ringflansch aufweisen, wobei der Ringflansch der unteren Dichteinrichtung weiter ins Innere des Aufnahmebehälters vorspringt als der Ringflansch der mindestens einen oberen Dichteinrichtung und derart eine Aufsetzfläche für die durch den Ringflansch der mindestens einen oberen Dichteinrichtung durchschiebbaren Küvette ausbildbar ist, und daß der Ringflansch der unteren und der mindestens einen oberen Dichteinrichtung ein Aufnahmeelement aufweist, in das jeweils ein Dichtungselement einsetzbar ist.

Eine vorteilhafte Weiterbildung der Erfindung sieht vor, daß unterhalb des im unteren Bereich des Aufnahmebehälters angeordneten ringförmigen Flansches eine Hebeeinrichtung für die im erfindungsgemäßen Aufnahmebehälter befindliche Küvette angeordnet ist, durch die die Küvette zumindest mit ihrem oberen Bereich nur in den oberen Rand des Aufnahmebehälters gehoben werden kann. Diese erfindungsgemäße Maßnahme besitzt den Vorteil, daß hierdurch das Einsetzen und insbesondere das Herausnehmen einer noch warmen Küvette nach dem Schmelzvorgang beträchtlich erleichtert wird.

Eine weitere vorteilhafte Weiterbildung der Erfindung sieht vor, daß unterhalb des im unteren Bereich des Aufnahmebehälters angeordneten ringförmigen Flansches eine Hebeeinrichtung für die im erfindungsgemäßen Aufnahmebehälter befindliche Küvette angeordnet ist, durch die die Küvette zumindest mit ihrem oberen Bereich über den oberen Rand des Aufnahmebehälters gehoben werden kann. Diese erfindungsgemäße Maßnahme besitzt den Vorteil, daß hierdurch das Einsetzen einer Küvette vor und insbesondere das Herausnehmen einer noch warmen Küvette nach dem Schmelzvorgang beträchtlich erleichtert wird.

Eine weitere vorteilhafte Weiterbildung der Erfindung sieht vor, daß die Hebevorrichtung als ein am Boden der Küvette ansetzender, von Druckluft beaufschlagter Kolben ausgebildet ist. Eine derartige Konstruktion zeichnet sich durch ihre besondere Einfachheit und Betriebssicherheit aus.

Weitere vorteilhafte Weiterbildungen der Erfindung sind Gegenstand der abhängigen Ansprüche.

Weitere Einzelheiten der Erfindung sind dem Ausführungsbeispiel zu entnehmen, das im folgenden anhand der Figuren beschrieben wird. Es zeigen:
- Figur 1: ein Ausführungsbeispiel eines Aufnahmebehälters mit einer eingesetzten Standküvette
- Figur 2: das Ausführungsbeispiel der Figur 1 mit einer eingesetzten Hängeküvette.
- Figur 3: das Ausführungsbeispiel der Figur 1 mit einer eingesetzten Hängeküvette.
und
- Figur 4: das Ausführungsbeispiel der Figur 3 mit integrierter Hebeeinrichtung.

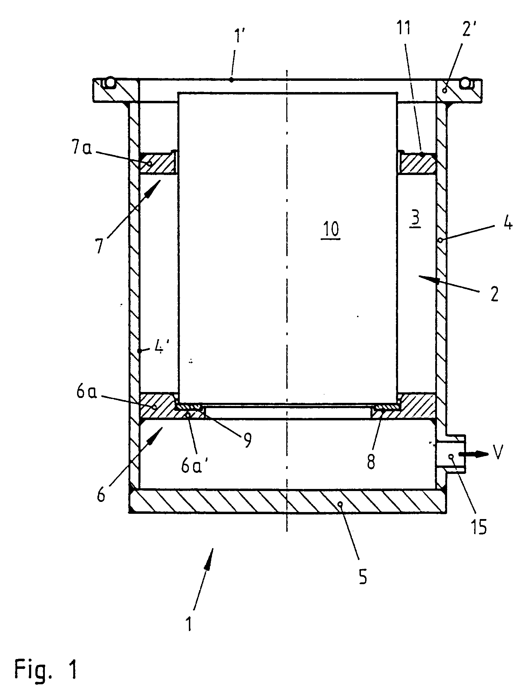

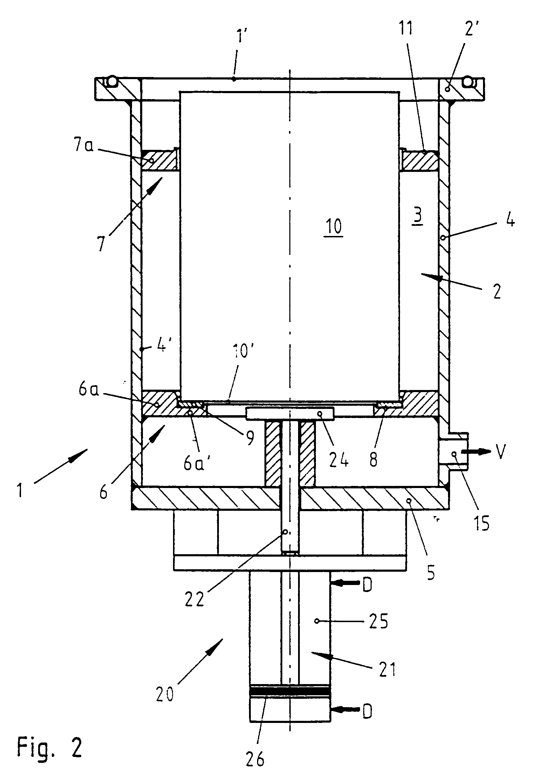

Das in den Figuren 1 und 2 dargestellte Ausführungsbeispiel eines Aufnahmebehälters 1, insbesondere eines Vakuumbehälters, weist in dem hier beschriebenen Fall die Gestalt eines Hohlzylinders 2 auf, dessen als Aufnahmeraum für eine Standküvette 10 fungierender Innenraum 3 durch einen Wandteil 4 und einen diesen nach unten hin abschließenden Bodenteil 5 begrenzt wird. Am oberen Ende des Wandteils 4 ist ein nach außen vorspringender umlaufender Flansch 2' ausgebildet, über den der Aufnahmebehälter 1 in eine in den Figuren nicht dargestellte Schmelzvorrichtung einsetzbar ist.

Im Innenraum 2 des Aufnahmebehälters 1 sind nun zwei Dichteinrichtungen 6 und 7 angeordnet, wobei die untere Dichteinrichtung 6 im unteren Bereich des Aufnahmebehälters 1 und die obere Dichteinrichtung 7 im oberen Bereich desselben angeordnet ist. Die erste Dichteinrichtung 6 besteht im wesentlichen aus einem mit der Innenwand 4' des Wandbereichs 4 des Aufnahmebehälters 1 fest verbundenen, umlaufenden Ringflansch 6a, der an seinem inneren Randbereich 6a' eine umlaufende Vertiefung 8 aufweist, in der ein aus entsprechendem Material, insbesondere einem hitzebeständigen Material, gefertigtes Dichtungselement 9 lagegesichert einsetzbar ist. Um ein radiales Verrutschen der auf dem ersten Dichtungselement 9 der unteren Dichteinrichtung 6 aufsetzenden Standküvette 10 sowie deren leichteres Einführen zu gewährleisten, ist der Ringflansch 6a stufenförmig ausgeführt. Der Ringflansch 6a der unteren Dichteinrichtung 6 bildet somit eine Aufsetzfläche für die Standküvette 10 aus, die eine sichere Positionierung derselben im Innenraum 3 des Aufnahmebehälters 1 garantiert.

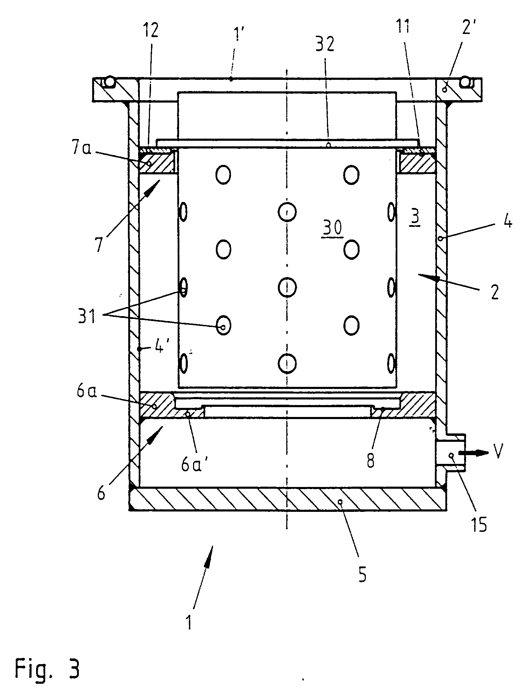

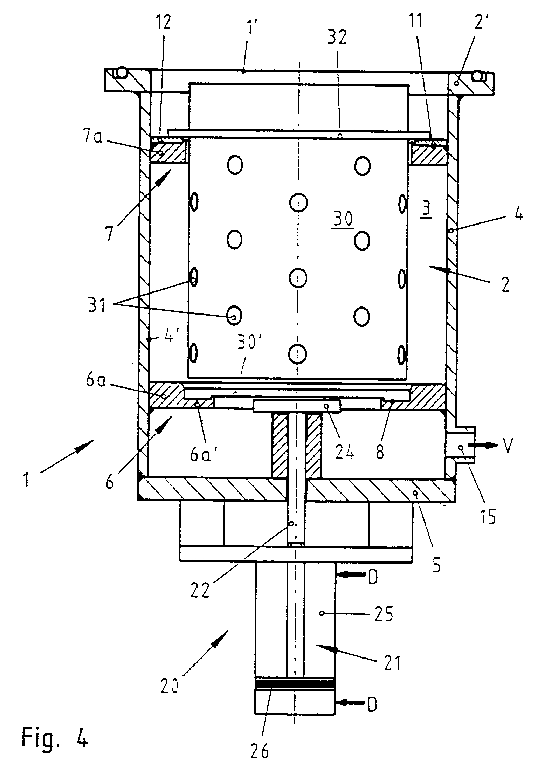

Die im oberen Bereich des Wandbereichs 2a des Aufnahmebehälters 1 angeordnete Dichteinrichtung 7 weist ebenfalls einen mit der Innenwand 4' des Wandbereichs 4 fest verbundenen, umlaufenden Ringflansch 7a auf, der an seiner Oberseite mit einer umlaufenden flachen Vertiefung 11 versehen ist, in die - wie es aus den Figuren 3 und 4 ersichtlich ist - ein zweites Dichtungselement 12 einlegbar ist. Wie aus den Figuren 1 und 2 leicht ersichtlich ist, ragt der Ringflansch 7a der oberen Dichteinrichtung 7 weniger weit ins Innere des den Aufnahmebehälter 1 ausbildenden Hohlzylinders 2 hinein als der Ringflansch 6a der unteren Dichteinricht 6, so daß die Standküvette 10 leicht auf die durch das Dichtelement 9 der unteren Dichteinrichtung 6 ausgebildete Aufsetzfläche aufsetzbar ist. Wie aus den Figuren 1 und 2 ersichtlich ist, dichtet die erste Dichteinrichtung 6 den oberhalb von ihr liegenden Bereich des Innenraums 3 des Aufnahmebehälters 1 gegenüber dem darunterliegenden Bereich ab, so daß dieser über eine in den Figuren nicht gezeigten Pumpe zur Erzeugung eines Vakuums V, die über einen Anschlußstutzen 15 im Wandbereich 4 des Aufnahmebehälters 1 anschließbar ist, zusammen mit der Standküvette 10 evakuiert werden kann. Es ist auch möglich, daß über den Anschlußstutzen 15 nach dem Evakuieren Schutzgas zugeführt werden kann.

Wie aus Figur 2 ersichtlich ist, kann der Aufnahmebehälter 1 optional mit einer allgemein mit 20 bezeichneten Hebeeinrichtung ausgerüstet sein, durch die das Einsetzen und Herausnehmen der Standküvette 10 erleichtert wird. Hierzu ist vorgesehen, daß unterhalb des Bodens 5 des Aufnahmebehälters 1 eine hydraulische oder pneumatische Hebeeinheit 21 vorgesehen ist, die einen Kolben 22 aufweist, der durch den Boden 5 des Aufnahmebehälters 1 hindurchtritt und über eine entsprechend gestaltete Auflagefläche 24 am Boden 10' der Standküvette ansetzt. In vorteilhafter Art und Weise wird hierzu eine Druckluft D einsetzende Hebeeinheit 21 verwendet, die einen Zylinder 25 aufweist, in dem der Kolben 22 verschiebbar aufgenommen ist. Durch eine Beaufschlagung einer Kolbenfläche 26 des Kolbens 22 mit einer über nicht gezeigte Mittel erzeugten Druckluft wird die Hebebewegung der Hebeeinrichtung 20 durchgeführt. In vorteilhafter Art und Weise ist dabei ein derart großer Hub vorgesehen, daß zumindest der obere Teil der Standküvette 10 zumindest so weit über den oberen Rand 1' des Aufnahmebehälters 1 hervortritt, daß er manuell oder über eine entsprechende Vorrichtung leicht erfaßt und die Standküvette 10 derart besonders einfach aus dem Aufnahmebehälter 1 herausgehoben werden kann.

Der in den Figuren 3 und 4 dargestellte Aufnahmebehälter 1 ist im wesentlichen identisch mit demjenigen der Figuren 1 und 2, so daß gleiche Teile mit gleichen Bezugsziffern versehen werden können. Unterschiedlich hierbei ist lediglich die vom Bedienungspersonal leicht durchzuführende Adaption des Aufnahmebehälters 1 für eine Verwendung mit einer vorzugsweise mit Löchern 31 versehenden Hängeküvette 30: Hierbei ist vorgesehen, daß zur Abdichtung des unter der oberen Dichteinrichtung 7 liegenden Bereichs des Innenraums 3 des Aufnahmebehälters 1 das weitere Dichtelement 12 in die flache Vertiefung 11 des oberen Ringflansches 7a eingesetzt wird, auf die nach dem Einsetzen der Hängeküvette 30 ein nach außen vorspringender, umlaufender Ringflansch 32 der Hängeküvette 30 aufsetzt. Von Vorteil ist es hierbei, wenn die Vertiefungen 8 bzw. 11 des oberen und des unteren Ringflansches 6a, 7a im wesentlichen gleich ausgeführt sind, so daß ein Dichtungselement 9, 12 sowohl den unteren wie auch in der oberen Dichteinrichtung 6 bzw. 7 verwendet werden kann.

Wie aus Figur 4 wiederum ersichtlich ist, ist auch die Hängeküvette 30 durch die Hebeeinrichtung 20 aus dem Aufnahmebehälter 1 bewegbar, indem der durch entsprechende hydraulische oder pneumatische Mittel verschiebbare Kolben 22 den Boden 30' der Hängeküvette 30 beaufschlagt.

## Patentansprüche

1. Aufnahmebehälter insbesondere Vakuumbehälter, für eine Küvette, wobei der Aufnahmebehälter (1) einen Wandbereich (4), der den einen Aufnahmeraum für die Küvette (10, 30) ausbildenden Innenraum (2) des Aufnahmebehälters (1) begrenzt, und einen Bodenbereich (5) aufweist, dadurch gekennzeichnet, daß im Aufnahmebehälter mindestens zwei voneinander beabstandet angeordnete Dichteinrichtungen (6, 7) vorgesehen sind, die jeweils einen vom Wandbereich (4) ins Innere des Aufnahmebehälters (1) vorspringenden, umlaufenden Ringflansch (6a, 7a) aufweisen, wobei der Ringflansch (6a) der unteren Dichteinrichtung (6) weiter ins Innere des Aufnahebehälters (1) vorspringt als der Ringflansch (7a) der mindestens einen oberen Dichteinrichtung (7) und derart eine Aufsetzfläche für die durch den Ringflansch (7a) der mindestens einen oberen Dichteinrichtung (7) durchschiebbaren Küvette (10, 30) ausbildbar ist, und daß der Ringflansch (6a, 7a) der unteren (6) und der mindestens einen oberen Dichteinrichtung (7) ein Aufnahmeelement (8, 11) aufweist, in das jeweils ein Dichtungselement (8, 12) einsetzbar ist.

2. Aufnahmebehälter nach Anspruch 1, dadurch gekennzeichnet, daß der Aufnahmebehälter (1) eine Hebeeinrichtung (20) für die Küvette (10, 30) aufweist.

3. Aufnahmebehälter nach Anspruch 2, dadurch gekennzeichnet, daß die Hebeeinrichtung (20) einen durch hydraulische oder pneumatische Mittel verschiebbaren Kolben (22) aufweist, durch den der Boden (10', 30') der Küvette (10, 30) beaufschlagbar ist.

4. Aufnahmebehälter nach Anspruch 3, dadurch gekennzeichnet, daß der Kolben (22) der Hebeeinrichtung (20) durch Druckluft (D) beaufschlagbar ist.

5. Aufnahmebehälter nach einem der Ansprüche 1 bis 4, dadurch gekennzeichnet, daß der Aufnahmebehälter (1) in seinem unteren Bereich einen Anschlußstutzen (15) für eine Vakuumpumpe aufweist.

6. Aufnahmebehälter nach einem der Ansprüche 1 bis 5, dadurch gekennzeichnet, daß der Ringflansch (6a) der unteren Dichteinrichtung (6) zur Verhinderung einer radialen Verschiebung der Küvette (10) stufenförmig ausgebildet ist.

7. Aufnahmebehälter nach einem der Ansprüche 1 bis 6, dadurch gekennzeichnet, daß mindestens eines der jeweils ein Dichtungselement (9, 12) aufnehmenden Aufnahmeelemente (8, 11) als eine flache Vertiefung ausgebildet ist.

8. Aufnahmebehälter nach einem der Ansprüche 1 bis 7, dadurch gekennzeichnet, daß das in den Ringflansch (6a, 7a) einsetzbare Dichtungselement (9, 12) aus einem hitzebeständigen Material gefertigt ist.

9. Aufnahmebehälter nach einem der Ansprüche 1 bis 8, dadurch gekennzeichnet, daß in den Aufnahmebehälter (1) eine Standküvette (10) einsetzbar ist.

10. Aufnahmebehälter nach einem der Ansprüche 1 bis 8, dadurch gekennzeichnet, daß in den Aufnahmebehälter eine Hängeküvette (30) einsetzbar ist.

11. Aufnahmebehälter nach Anspruch 10, dadurch gekennzeichnet, daß in einem in den Aufnahmebehälter (1) eingesetzten Zustand der Hängeküvette (30) diese mit einem nach außen vorspringenden Flansch (32) auf dem Dichtungselement (12) der oberen Dichteinrichtung (7) des Aufnahmebehälters (1) aufsetzt.

12. Schmelzvorrichtung, gekennzeichnet durch einen Aufnahmebehälter (1) nach einem der Ansprüche 1 bis 11.

## Claims

1. A receiving container, in particular a vacuum container, for a cell, the receiving container (1) having a base region (5) and a wall region (4) which delimits the interior (2) of the receiving container (1), this interior forming a receiving space for the cell (10, 30), characterized in that, provided in the receiving container, there are at least two sealing means (6, 7) which are arranged at a mutual spacing and have a respective peripheral annular flange (6a, 7a) projecting from the wall region (4) into the interior of the receiving container (1), in which arrangement the annular flange (6a) of the lower sealing means (6) projects further into the interior of the receiving container (1) than the annular flange (7a) of the at least one upper sealing means (7) and thus a bearing surface nay be formed for the cell (10, 30), which may be pushed through the annular flange (7a) of the at lease one upper sealing means (7), and in that the annular flange (6a, 7a) of the lower (6) and the at least one upper sealing means (7) has a receiving element (8, 11) into which a respective sealing element (9, 12) may be inserted.

2. A receiving container according to Claim 1, characterized in that the receiving container (1) has a lifting device (20) for the cell (10, 30).

3. A receiving container according to Claim 2, characterized in that the lifting device (20) has a piston (22) which may be displaced by hydraulic or pneumatic means and may act upon the base (10', 30') of the cell (10, 30).

4. A receiving container according to Claim 3, characterized in that the piston (22) of the lifting device (20) may be acted upon by compressed air (D).

5. A receiving container according to one of Claims 1 to 4, characterized in that the receiving container (1) has in its lower region a connecting piece (15) for a vacuum pump.

6. A receiving container according to one of Claims 1 to 5, characterized in that the annular flange (6a) of the lower sealing means (6) is of a stepped construction to prevent radial displacement of the cell (10).

7. A receiving container according to one of Claims 1 to 6, characterized in that at least one of the receiving elements (8, 11) receiving a respective sealing element (9, 12) is constructed as a flat depression.

8. A receiving container according to one of Claims 1 to 7, characterized in that the sealing element (9, 12) which may be inserted into the annular flange (6a, 7a) is manufactured from a heat-resistant material.

9. A receiving container according to one of Claims 1 to 8, characterized in that a standing cell (10) may be inserted into the receiving container (1).

10. A receiving container according to one of Claims 1 to 8, characterized in that a suspended cell (30) may be inserted into the receiving container.

11. A receiving container according to Claim 10, characterized in that, when the suspended cell (30) is in a condition inserted into the receiving container (1), it rests on the sealing element (12) of the upper sealing means (7) of the receiving container (1) by means of an outwardly projecting flange (32).

12. A melting device, characterized by a receiving container (1) according to one of Claims 1 to 11.

## Revendications

1. Cuve de réception, en particulier cuve sous vide pour un creuset, la cuve de réception (1) comprenant une paroi (4), qui délimite le volume intérieur (2) de la cuve de réception (1) formant un espace de réception pour le creuset (10, 30), et un fond (5), caractérisée en ce qu'il est prévu de poser dans la cuve de réception au moins deux dispositifs d'étanchéité (6, 7), disposés à une distance donnée l'un de l'autre, qui comportent chacun une flasque annulaire (6a, 7a) périphérique, qui s'avance en saillie à l'intérieur de la cuve de réception (1), la flasque annulaire (6a) du dispositif d'étanchéité inférieur (6) s'avançant davantage à l'intérieur de la cuve de réception (1) que la flasque annulaire (7a) du dispositif d'étanchéité supérieur (7), au moins au nombre d'un, de manière à former ainsi une surface de support du creuset (10, 30), qui est introduit en passant à travers la flasque annulaire (7a) du dispositif d'étanchéité supérieur (7), au moins au nombre d'un, et en ce que la flasque annulaire (6a, 7a) du dispositif d'étanchéité inférieur (6) et du dispositif d'étanchéité supérieur (7), au moins au nombre d'un, est munie d'un logement (8, 11), dans lequel est inséré un joint d'étanchéité (8, 12).

2. Cuve de réception selon la revendication 1, caractérisée en ce que la cuve de réception (1) comporte un dispositif de levage (20) destiné au creuset (10, 30).

3. Cuve de réception selon la revendication 2, caractérisée en ce que le dispositif de levage (20) comporte un piston (22) qui se déplace sous l'action d'un agent hydraulique ou pneumatique et qui sollicite le fond (10', 30') du creuset (10, 30).

4. Cuve de réception selon la revendication 3, caractérisée en ce que le piston (22) du dispositif de levage (20) se déplace sous l'action de l'air comprimé (D).

5. Cuve de réception selon l'une quelconque des revendications 1 à 4, caractérisée en ce que la cuve de réception (1) est munie dans sa partie inférieure d'une tubulure de raccordement (15) destinée à une pompe à vide.

6. Cuve de réception selon l'une quelconque des revendications 1 à 5, caractérisée en ce que la flasque annulaire (6a) du dispositif d'étanchéité inférieur (6) est formée avec un épaulement pour éviter un déplacement radial du creuset (10).

7. Cuve de réception selon l'une quelconque des revendications 1 à 6, caractérisée en ce qu'au moins l'un des logements (8, 11), destinés à recevoir chacun un joint d'étanchéité (9, 12), est conçu en forme de cavité plane.

8. Cuve de réception selon l'une quelconque des revendications 1 à 7, caractérisée en ce que le joint d'étanchéité (9, 12) à insérer dans la flasque annulaire (6a, 7a) est réalisé dans un matériau résistant aux températures élevées.

9. Cuve de réception selon l'une quelconque des revendications 1 à 8, caractérisée en ce qu'il est possible d'introduire un creuset à poser (10) dans la cuve de réception (1).

10. Cuve de réception selon l'une quelconque des revendications 1 à 8, caractérisée en ce qu'il est possible d'introduire un creuset à suspendre (30) dans la cuve de réception (1).

11. Cuve de réception selon la revendication 10, caractérisée en ce que le creuset à suspendre (30), dans la position de montage dans la cuve de réception (1), est en appui, par l'intermédiaire d'une flasque (32) s'avançant en saillie vers l'extérieur, sur le joint d'étanchéité (12) du dispositif d'étanchéité supérieur (7) de la cuve de réception (1).

12. Dispositif de coulée caractérisé par une cuve de réception (1) selon l'une quelconque des revendications 1 à 11.
